# EUROPÄISCHE PATENTANMELDUNG

(11) **EP 2 799 465 A1**
(43) Veröffentlichungstag der Anmeldung: **05.11.2014**
(21) Anmeldenummer: 13165807.2
(22) Anmeldetag: 29.04.2013
(51) Int. Cl.: C08G 65/30

(54) **Verfahren zur Aufreinigung von Poly(arylenethern)**

(71) Anmelder: Evonik Industries AG, 45128 Essen (DE)
(72) Erfinder: Roos, Martin, Dr., 45721 Haltern am See (DE); Herwig, Jürgen, Dr., 46569 Hünxe (DE); Micoine, Kévin, Dr., 45739 Oer-Erkenschwick (DE); Weinelt, Frank, Dr., 48727 Billerbeck (DE)

(57) **Zusammenfassung**

Die Erfindung betrifft ein Aufreinigungsverfahren für Poly(arylenether) der Formel (I) 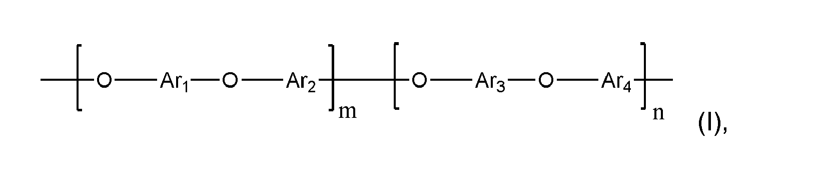 worin m = 0 bis 1,0 und n = 1,0 - m ist und Ar₁, Ar₂, Ar₃ und Ar₄ unabhängig voneinander zweiwertige Arylenreste bedeuten, wobei die Verbindung der Formel (I) in einem ersten Schritt unter Erhalt eines Rohprodukts hergestellt werden durch Inkontaktbringen eines Metallsalzes zweiwertiger Dihydroxy-Derivate von Ar₁ bzw. Ar₃ in Gegenwart eines Lösemittels LM1 mit einem oder mehreren dihalogenierten Derivaten von Ar₂ und/oder Ar₄, wobei ein ggf. vorhandener Niederschlag unter Erhalt einer Lösung L abgetrennt (Schritt B) und die Lösung L einer Membranfiltration unterzogen wird (Schritt C).

## Beschreibung

Die vorliegende Erfindung betrifft ein Verfahren zur Aufreinigung von Poly(arylenethern) und ihre Verwendung.

Die Elektronikindustrie verwendet dielektrische Materialien als Isolierschichten zwischen verschiedenen Schaltkreisen und Schaltkreisschichten in integrierten Schaltungen und verwandten elektronischen Bauteilen. Da die Elektronikindustrie zu kompakteren Schaltkreisen mit feinerer Schaltkreis - oder Liniengeometrie in dichter gepackten Schaltkreismustern übergeht, werden die Anforderungen an die Dielektrizitätskonstante der Isolierschichten für niedrigere Werte immer höher.

Deshalb besteht in der Elektronikindustrie Bedarf danach, dielektrische Zwischenschichtmaterialien auf Siliciumdioxidbasis durch Materialien von niedrigerem dielektrischen Wert zu ersetzen. Siliciumdioxid und dessen modifizierte Versionen haben dielektrische Werte in der Größenordnung von 3,0 bis 5,0 und üblicherweise 4,0 bis 4,5. Polymere Materialien, die als Ersatz für dielektrische Zwischenschichtmaterialien aus Siliciumdioxid verwendet werden, können Werte für die Dielektrizitätskonstante im Bereich von 1,9 bis 3,5 aufweisen, wobei diese Werte stark von der Struktur der polymeren Materialien abhängig sind. Um Siliciumdioxid erfolgreich als dielektrisches Zwischenschichtmaterial zu ersetzen, müssen die Eigenschaften der polymeren Materialien den strikten Herstellungsanforderungen für integrierte Schaltkreise oder Mikrochips in der Elektronikindustrie entsprechen.

Es sind bereits verschiedene Polymere als dielektrische Materialien für integrierte Schaltkreise vorgeschlagen worden, wobei solche polymeren Materialien Polyimide und fluorierte Poly(arylenether) umfassen. Die Gegenwart von Fluor in polymeren dielektrischen Materialien wurde dazu genutzt, verschiedene Ergebnisse zu erzielen. In den Polyimiden senkten fluorhaltige Substituenten den dielektrischen Wert, verringerten die Hydrophilie, verbesserten die optische Transparenz und steuerten die Löslichkeit von Polyimiden in organischen Lösemitteln. Fluor in den fluorierten Poly(arylenethern), die als Ersatz für Materialien von geringem dielektrischem Wert vorgeschlagen wurden, verbesserte die Synthese der fluorierten Poly(arylenether), indem es die entsprechenden Stellen in den Polymervorläufern aktivierte und niedrige dielektrische Werte zur Verfügung stellte. Zusätzlich wurden Polyimide mit thermisch instabilen Derivaten verändert, die sich zu gasförmigen Nebenprodukten zersetzen und ein selbstschäumendes dielektrisches Polyimidmaterial ergeben, das verringerte Dielektrizitätskonstanten aufweist, wobei die niedrige Dielektrizitätskonstante von Luft, die 1,00 beträgt, ausgenutzt wird.

Aus EP-A-0755957 sind nicht-fluorierte Poly(arylenether) bekannt, welche als Ersatz eines dielektrischen Materials auf Siliciumdioxidbasis geeignet sind. Sie weisen eine niedrige Dielektrizitätskonstante, hohe Wärmestabilität und geringe Hydrophilie bei relativ hoher Luftfeuchtigkeit auf. Sie weisen folgende Struktur auf: 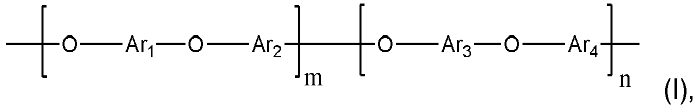 worin Ar₂, Ar₃ und Ar₄ einzeln zweiwertige Arylenreste und Ar₁ ein 9,9-Bis(4-hydroxyphenyl)fluoren-Rest darstellen.

Die Poly(arylenether) werden beispielsweise durch die Ullmann-Kondensation unter Einsatz kupferhaltiger Katalysatoren synthetisiert. Hierzu kann beispielsweise ein Alkalimetallsalz von 9,9-Bis(4-hydroxyphenyl)fluoren, ggfs. mit einem Alkalimetallsalz eines zweiwertigen Dihydroxy-Derivats von Ar₃ in Gegenwart eines Kupferkatalysators und eines Lösemittels wie Benzophenon bei erhöhter Temperatur im Bereich von 100 bis 300 °C mit einem oder mehreren dihalogenierten Derivaten von Ar₂ und/oder Ar₄ in Kontakt gebracht und das resultierende Poly(arylenether)produkt als Rohprodukt gewonnen werden.

Die Aufarbeitung des Reaktionsgemischs erfolgt üblicherweise durch Abkühlen des Reaktionsgemischs auf beispielsweise 100 °C und dem Versetzen mit Toluol. Anschließend kann es in einer schnell gerührten Lösung aus Essigsäure in Methanol (bspw. 2,5-%ig) abgeschreckt werden. Hierbei entsteht ein Niederschlag, der isoliert werden kann. Daraufhin kann der Niederschlag für einige Stunden in siedendes Wasser gelegt werden. Danach kann der Niederschlag in einem Ofen (100 °C) getrocknet und in Tetrahydrofuran aufgelöst werden. Die Polymerlösung wird filtriert und dann in Methanol ausgefällt. Der Niederschlag wird gesammelt, mit einem Lösemittel wie Methanol gewaschen und anschließend im Vakuum getrocknet.

Weitere Poly(arylenether)-Polymere sowie die Aufarbeitung mit Essigsäure-Methanol-Lösungen unter Fällung des Rohprodukts werden beispielsweise in EP-A-0939096, EP-A-1327652, EP-A-0758664, US 2005/014921 und US 2005/240002 beschrieben.

Diese bewährte Aufreinigungsmethode ist jedoch aufwändig und kostenintensiv. Zudem gelangen Chemikalien wie giftige Gemische aus Essigsäure und Methanol zum Einsatz.

Demzufolge war es Aufgabe der vorliegenden Erfindung, für Poly(arylenether) der Formel (I) ein neues Verfahren zur Aufreinigung zur Verfügung zu stellen, welches weniger kostenintensiv ist und geringeren Aufwand bedeutet. Zudem sollte das Verfahren einfach durchzuführen sein, sich durch erhöhte Sicherheit auszeichnen und geringe Abfälle generieren.

Die Erfindung sollte ein Verfahren zur Aufreinigung von Poly(arylenethern) der Formel (I) 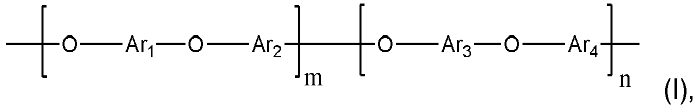 zur Verfügung stellen (Aufreinigungsverfahren), worin m = 0 bis 1,0 und n = 1,0 - m ist und Ar₁, Ar₂, Ar₃ und Ar₄ unabhängig voneinander zweiwertige Arylenreste bedeuten. Hierbei können die Verbindungen der Formel (I) in einem ersten Schritt unter Erhalt eines Rohprodukts hergestellt werden durch Inkontaktbringen eines Metallsalzes zweiwertiger Dihydroxy-Derivate von Ar₁ bzw. Ar₃ in Gegenwart eines Lösemittels LM1 mit einem oder mehreren dihalogenierten Derivaten von Ar₂ und/oder Ar₄ (Herstellverfahren). Das Rohprodukt fällt in Lösung oder in einer Suspension an. Die zur Reaktion eingesetzten Derivate von Ar₁, Ar₂, Ar₃ und Ar₄ in diesem Herstellverfahren werden im Folgenden als Monomere bezeichnet.

Die Aufgabe ist durch ein Aufreinigungsverfahren gemäß Anspruch 1 gelöst worden (erfindungsgemäßes Verfahren). Demgemäß wird ein Verfahren zur Aufreinigung zur Verfügung gestellt, welches dadurch gekennzeichnet ist, dass in einem Schritt B ein ggf. vorhandener Niederschlag unter Erhalt einer Lösung L abgetrennt und in einem darauffolgenden Schritt C die Lösung L einer Membranfiltration unterzogen wird.

Der entscheidende Unterschied des vorliegenden, erfindungsgemäßen Aufreinigungsverfahrens im Vergleich zum Stand der Technik ist darin zu sehen, dass das Rohprodukt (auch Rohpolymer genannt) nicht gefällt wird. Vielmehr verbleibt das Rohprodukt während der Aufreinigung in Lösung, wodurch es sich leichter verarbeiten lässt und keine Verluste durch Umkristalllisation entstehen.

Weitere Ausführungsformen der Erfindung ergeben sich aus den weiteren Ansprüchen.

Das Polymer der Formel (I) enthält vorzugsweise keine Halogengruppen (mit Ausnahme der ggf. vorhandenen terminalen Halogengruppen aus den dihalogenierten Derivaten von Ar₂ und/oder Ar₄) oder andere gegenüber Metallen reaktiven Gruppen.

Vorzugsweise ist m der Formel (I) 0,5 bis 1, bevorzugt 0,8 bis 1 und besonders bevorzugt 1.

Das Poly(arylenether) der Formel (I) weist vorzugsweise ein zahlensmittleres Molekulargewicht von 10.000 bis 30.000 auf. Die Bestimmung des Molekulargewichts erfolgt mittels Gelpermeationschromatographie (GPC) gegen einen Styrol-Standard.

Die dihalogenierten Derivate Ar₂ bzw. Ar₄ können mit Fluor, Chlor, Brom oder lod halogeniert sein, wobei Chlor und Brom bevorzugt sind. Ganz besonders bevorzugt ist Brom.

Die Metallsalze der zweiwertigen Dihydroxy-Derivate können in-situ erhalten werden durch Vermischen der entsprechenden Dihydroxy-Verbindungen mit entsprechenden Metallhydroxiden, Anhydrobasen oder Mischungen daraus. Als Gegenionen der Dihydroxy-Derivate sind beispielsweise Alkali- und Erdalkalimetalle zu nennen, wobei Alkalimetalle bevorzugt sind. Besonders bevorzugte Alkalimetalle sind Kalium und Natrium, wobei Kalium ganz besonders bevorzugt ist. Geeignete Anhydrobasen sind zum Beispiel Metallhydride, Alkoholate, Metallcarbonate, tertiäre Amine.

Das bei der Metallsalzbildung eventuell entstandene Wasser sollte vor der Polymerisation entfernt werden. Dies kann beispielsweise durch azeotrope Destillation erfolgen werden.

Die Reaktion der Monomere (Polymerisation) erfolgt vorzugsweise bei einer Temperatur von 100 bis 300 °C. Vorzugsweise wird eine Temperatur in einem Bereich von 180 bis 250 °C gewählt. Höhere Temperaturen können zum Abbau oder zur Zersetzung der Reaktanten, des Polymeren und der eingesetzten Lösemittel führen.

Das Herstellverfahren kann mit oder ohne Katalysator durchgeführt werden. Vorzugsweise erfolgt die Reaktion der zweiwertigen Dihydroxy-Derivate von Ar₁ bzw. Ar₃ mit den dihalogenierten Derivaten von Ar₂ und/oder Ar₄ in Gegenwart eines Katalysators. Geeignete homogene oder heterogene Katalysatoren für die Reaktion, vorzugsweise homogene Katalysatoren, sind dem Fachmann bekannt. Vorzugsweise enthalten die Katalysatoren Metalle, die ausgewählt sind aus Kupfer, Palladium oder Eisen. Bevorzugt sind kupferhaltige Katalysatoren, besonders bevorzugt Kupfer(I).

Während der Polymerisation können Niederschläge wie Salze des Katalysators, der Kationen, die aus den Metallsalzen der zweiwertigen Dihydroxy-Derivate stammen, und der Halogenide aus den dihalogenierten Derivaten entstehen.

Untersuchungen des Mechanismus' haben gezeigt, dass das Cu(I)-Kation und nicht elementares Kupfer (Cu(0)) oder das Cu(II)-Kation der aktive Katalysator ist, so dass Kupferkatalysatoren enthaltend Cu (I) bevorzugt sind. Grundsätzlich können jedoch auch elementares oder zweiwertiges Kupfer eingesetzt werden, welche in situ zu Cu(I) umgesetzt werden. Die in situ-Herstellung ist dem Fachmann bekannt.

Palladium wird üblicherweise in den Oxidationszuständen Pd(0) oder Pd(II) eingesetzt. Eisen kann als Fe (II) oder Fe (III) zum Einsatz kommen.

Der in der Reaktion eingesetzte Kupferkatalysator kann ein Kupfersalz wie Kupferhalogenid, z. B. Kupferchlorid, Kupferbromid oder Kupferiodid sein. Kupferhalogenide, insbesondere Kupferbromid, werden bevorzugt, weil sie besonders wirksam sind, aber auch andere Kupfersalze können verwendet werden, z. B. Kupferacetat und Kupferformiat. Der Kupferkatalysator kann auch ein Komplex eines der vorstehenden Kupfersalze sein, der durch Kombination des Kupfersalzes mit einem komplexbildenden Mittel wie Pyridin, Dimethylacetamid, Chinolin, Acridin, Dimethylformamid und n-Methylpyrrolidon hergestellt wurde. Die Stoffmenge des komplexbildenden Mittels kann in einem weiten Rahmen schwanken.

Die Reaktion zwischen den dihalogenierten Derivaten und den Metallsalzen der zweiwertigen Dihydroxy-Derivate läuft vorzugsweise auf äquimolarer Basis ab. Variationen in der Verteilung des Molekulargewichts werden dadurch erreicht, dass die Verhältnisse zwischen dem Diolsalz und dem Dihalogenid geändert werden.

Geeignete Lösemittel LM1 umfassen Benzophenon, Diphenylether, Benzonitril, Dialkoxybenzole, in denen die Alkoxygruppe 1 bis 4 Kohlenstoffatome enthält, Trialkoxybenzole, in denen die Alkoxygruppe 1 bis 4 Kohlenstoffatome enthält, Diphenylsulfon, Dimethylsulfoxid, Dimethylsulfon, Diethylsulfoxid, Diethylsulfon, Diisopropylsulfon, Tetrahydrothiophen, 1,1-Dioxid(tetramethylensulfon oder -sulfolan) und Tetrahydrothiophen-1-monoxid. Besonders bevorzugte Lösemittel LM1 sind Diphenylether, Benzophenon oder Mischungen daraus, wobei Mischungen ganz besonders bevorzugt sind.

In einer bevorzugten Ausführungsform der Erfindung wird vor der Abtrennung eines ggf. vorhandenen Niederschlags (Schritt B) ein aprotisches, polares Lösemittel LM2 zum Rohprodukt gegeben (Schritt A). Ein bevorzugtes Lösemittel LM2 wird ausgewählt aus einem aliphatischen oder aromatischen, cyclischen oder nicht-cyclischen Ether, Keton, Ester oder einem Gemisch daraus, wobei Cyclohexanon, Tetrahydrofuran, gamma-Butyrolacton oder ein Gemisch der Lösemittel besonders bevorzugt sind und Tetrahydrofuran ganz besonders bevorzugt ist.

Die Zugabe des Lösemittels LM2 führt zu einer Viskositätsverringerung, die für die Membranfiltration hilfreich ist. Zudem können die bereits genannten Niederschläge auftreten, welche im Schritt B abgetrennt werden können.

Es ist vorteilhaft, mit Schritt A bzw. vor Schritt B eine Säure zur Lösung bzw. Suspension (Mischung M) zu geben. Hierdurch werden die terminalen Phenolat-Gruppen des Poly(arylenethers) protoniert. Die Säure kann vor, nach oder mit dem Lösemittel LM2, separat oder als Gemisch, hinzugefügt werden. Vorzugsweise werden die Säuren aus Carbonsäuren ausgewählt, wobei Essigsäure besonders bevorzugt ist. Durch die Säurezugabe wird der Anteil an Kaliumverbindungen im aufgearbeiteten Poly(arylenether) weiter reduziert.

Die Stoffmenge an Säure, die hinzugegeben wird, richtet sich nach der Stoffmenge an Phenolat-Endgruppen. Vorzugsweise entspricht die Stoffmenge der aus den Säuren freigesetzten Protonen mind. 80 % der Stoffmenge an Phenolat-Endgruppen. Die Bestimmung der Stoffmenge an Phenolat-Endgruppen ist dem Fachmann geläufig und kann beispielsweise über die molare Masse ermittelt werden.

Die Abtrennung des Niederschlags gemäß Schritt B kann mittels Filtration oder Zentrifugation erfolgen, wobei die beiden Möglichkeiten miteinander kombiniert werden können. Das Filter, welches für die Abtrennung des ggf. vorhandenen Niederschlag in einem Schritt B eingesetzt werden kann, weist vorzugsweise eine zahlenmittlere Porengröße von 0,1 bis 50 µm, bevorzugt von 0,3 bis 30 µm und besonders bevorzugt von 0,5 bis 20 µm auf. Die Membranfiltration und die Weiterverarbeitung sollen insbesondere mit einer optisch klaren Lösung erfolgen.

Die Membranfiltration im Schritt C kann eine Nanofiltration oder eine Ultrafiltration sein, wobei eine Nanofiltration bevorzugt ist. Mittels Ultrafiltration lassen sich Partikel mit einer Größe von ca. 5 bis 100 nm abtrennen. Der Cut-off (Trenn- oder Ausschlussgrenze) des Molekulargewichts liegt etwa in einem Bereich von 1000 bis 200000 g/mol. Durch die Nanofiltration kann die Abtrennung von Partikeln mit einer Größe von ca. 1 bis 10 nm (Cut-off ca. 100 bis 10000 g/mol) durchgeführt werden.

Das Filter weist vorzugsweise eine Membran auf, mit einer Trennschicht aus Polymer, Glas, Metall, Keramik oder deren Gemischen hergestellt wird.

Bevorzugt sind lösemittelstabile-Polymermembranen, wie sie beispielsweise in US 2012/0123079, WO 2010/142979, US 2012/0279922 oder EP 0943645B1 beschrieben werden, oder Keramikmembranen, welche etwa von den Firmen Inopor GmbH, PALL Corporation oder TAMI Industries angeboten werden. Wegen des höheren Verhältnisses der aktiven Membranfläche zum Anlagevolumen sind Membranen in Form von Spitalwickelmodulen besonders bevorzugt.

Durch die Membranfiltration können das Lösemittel LM1, der Katalysator und ggf. entstandene niedermolekulare Oligomere des Poly(arylenethers) entfernt werden. Vorzugsweise wird die Nanofiltration derart durchgeführt, dass der Anteil an Metallionen 0 bis 100 ppm, vorzugsweise 0 bis 30 ppm, bezogen auf das erhaltende Feststoff-Produkt beträgt. Weiterhin ist es bevorzugt, dass der Gewichtsanteil an LM1 am Ende der Membranfiltration, bezogen auf das Gesamtgewicht der Lösung, weniger als 1 % beträgt. Derartige Ergebnisse kann der Fachmann durch Variation der Dauer Membranfiltration und der Membran-Trennschicht einstellen.

Geeignete Membrantrennschichten sind zum Beispiel in WO 2010/142979, US 2012/0279922 oder EP 0943645B1 beschrieben. Geeignete Polymere sind Polyacrylonitrile (PAN), Polyimide (PI), Polyetheretherketone (PEEK), Polyvinylidenfluoride (PVDF), Polyamide (PA), Polyamidimide (PAD), Polyethersulfone (PES), Polybenzimidazole (PBI), sulfonierte Polyetherketone (SPEEK), Polyethylene (PE), Polypropylene (PP).

Geeignete Keramikmembranen umfassen poröse anorganische Materialien, Keramikmembranen oder Polymerkeramikmembranen aus Aluminiumoxid, Titaniumdioxid, Zirkondioxid, Siliciumdioxid, Titaniumnitrit oder deren Mischungen und Modifikationen.

Der Poly(arylenether), welcher nach der Membranfiltration (Schritt C) in Lösung umfassend das Lösemittel LM2 erhalten wird, wird vorzugsweise in einem Folgeschritt D als Feststoff gewonnen. Die Feststoffgewinnung kann mittels Fällung oder Entfernung des Lösemittels erfolgen.

Zur Fällung des Poly(arylenethers) wird die Polymerlösung aus dem Schritt C in einen Lösungsmittel gegeben, der mischbar mit dem LM2 ist und der den Poly(arylenether) nicht auflöst. Geeignet Lösungsmittel sind zum Beispiel Alkohole, Ketone oder Wasser, bevorzugt Ethanol oder Aceton.

Die Entfernung des Lösemittels ist dem Fachmann geläufig und kann beispielsweise durch Druckreduktion, Temperaturerhöhung oder dergleichen beschleunigt werden.

Der erhaltene Poly(arylenether) kann als Pulver oder Granulat, bspw. mittels Entgasungsextrusion, erhalten werden.

Vorzugsweise werden Ar₁, Ar₂, Ar₃ und Ar₄ unabhängig voneinander ausgewählt aus:

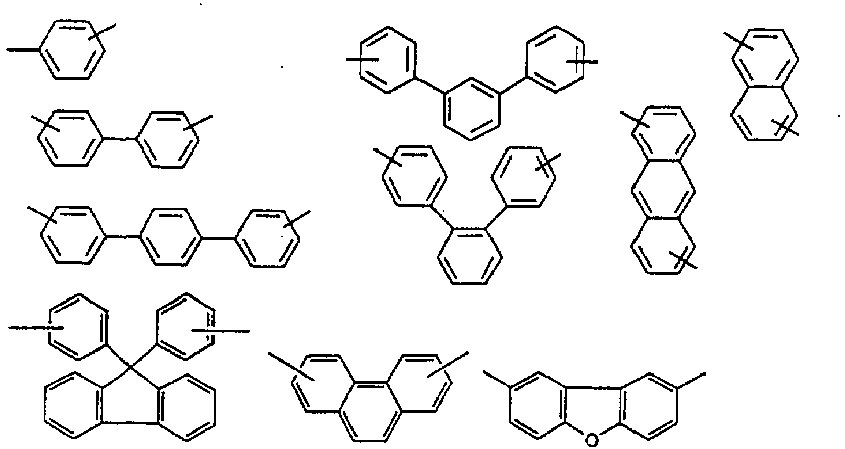

Variationen in den Monomeren ermöglichen den Zugang zu vielen verschiedenen Eigenschaften wie die Verringerung oder Eliminierung von Kristallinität, Modul und Zugfestigkeit. Diese Polymere haben eine geringe Polarität, enthalten keine weiteren funktionellen oder reaktiven Gruppen, die sich nachteilig auf ihre Verwendung bei der dielektrischen Isolierung auswirken könnten, und sind in einer inerten Atmosphäre bis zu Temperaturen von 400 bis 450°C wärmestabil.

Der Poly(arylenether) können auch vernetzt sein, und zwar entweder durch sich selbst durch die Einwirkung von Temperaturen von mehr als 350 °C oder durch Einsatz eines Vernetzungsmittels und Versehen des Polymeren mit bekannten Schutzgruppen an den Enden wie Phenylethynyl, Benzocyclobuten, Ethynyl und Nitril.

Die Polymere können Homopolymere sein, die im Wesentlichen aus einer einzigen wiederkehrenden Einheit bestehen. Sie können auch Copolymere sein, die eine wiederkehrende Einheit der genannten Struktur in Kombination mit anderen wiederkehrenden Einheiten von in der Technik bekannten Polyolen und Phenylen umfassen. Ein Copolymer kann vom alternierenden, statistischen oder Blocktyp sein.

In einer bevorzugten Ausführungsform ist in Formel (I) m = 1 und Ar₁ entspricht der Formel (V)

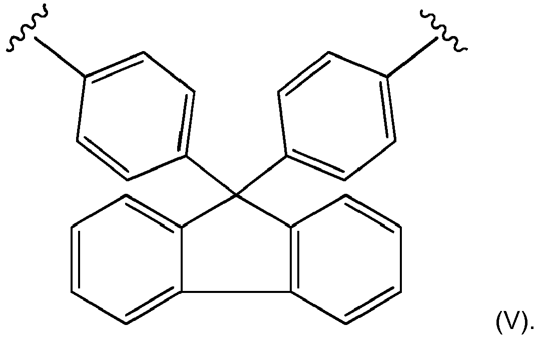

Hierdurch resultiert ein Poly(arylenether) der Formel (II)

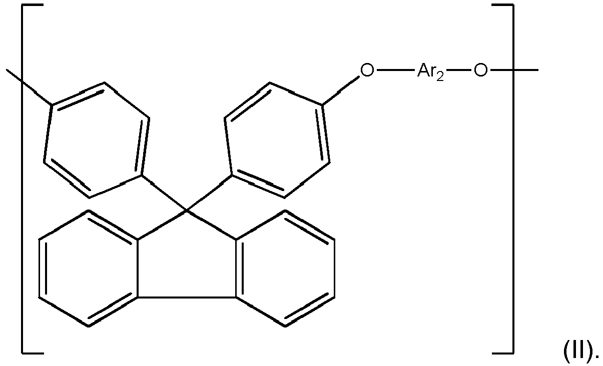

In einer weiteren bevorzugten Ausführungsform ist in Formel (I) m = 1 und Aᵣ2 entspricht der Formel (VI)

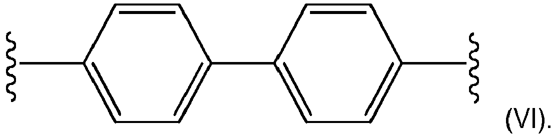

Hierdurch resultiert ein Poly(arylenether) der Formel (III)

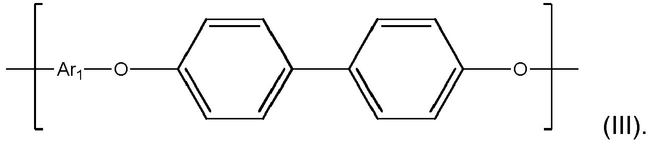

In einer besonders bevorzugten Ausführungsform ist m = 1, Ar₁ entspricht der Formel (V) und Ar₂ entspricht der Formel (VI), so dass der Poly(arylenether) eine Struktur der Formel (IV) aufweist:

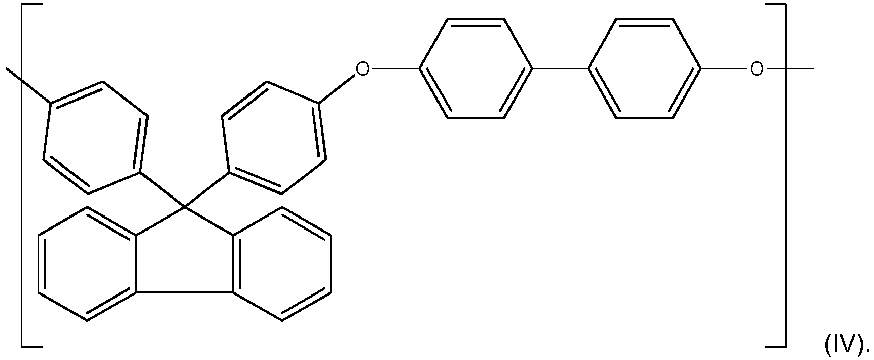

In einer ganz besonders bevorzugten Ausführungsform der Erfindung erfolgt das Herstellverfahren unter Einsatz von 4,4'-Dibrombiphenyl und 9,9-Bis(4-hydroxyphenyl)fluoren (Bisphenol FL) unter Erhalt eines Poly(arylenethers) der Formel (IV). Die Reaktion wird in einer Mischung aus Benzophenon und Diphenylether durchgeführt, wobei Kupferbromid als Katalysator eingesetzt wird. Kalium fungiert als Gegenion des Bisphenols FL. Während der Reaktion kann bereits Kaliumbromid ausfallen. Die Aufarbeitung erfolgt durch Zugabe von Tetrahydrofuran (Schritt A) und Essigsäure, wodurch Kupferbromid und weiteres Kaliumbromid ausfallen; diese Salze werden abgetrennt (Schritt B). Es wird eine optisch klare Lösung erhalten. Anschließend wird die Membranfiltration durchgeführt, so dass niedermolekulare Oligomere des Poly(arylenethers), Diphenylether, Benzophenon und Reste an KupferKatalysator abgetrennt werden. Es wird eine optisch klare Lösung erhalten, die Poly(arylenether) und Tetrahydrofuran enthält.

Ein weiterer Gegenstand der vorliegenden Erfindung ist die Verwendung des Poly(arylenethers), welches aus dem erfindungsgemäßen Verfahren gewonnen wird, in Spritzgussteilen, Halbzeugen (Stockshapes), Fasern, Folien, Beschichtungen, elektronischen Schaltkreisgegenständen und Filmen sowie als Material für Dichtungen wie beispielsweise Dichtungsringen. Die Poly(arylenether) können für die Herstellung der zuvor genannten Gegenstände verwendet werden.

Die Beschichtungen können beispielsweise für Drahtbeschichtungen eingesetzt werden.

Weiterhin kann der die isolierende Eigenschaft des Poly(arylethers) ausgenutzt werden, indem er in der Elektrik und Elektronik die bisherigen Isolatoren ersetzt. Insofern kann er als Isolator verwendet werden.

Die Anwendungsfelder der Poly(arylenether) sind beispielsweise in Bereichen der Ölfeldanwendungen, in Luft- und Raumfahrt, in der Verteidigung, Rotating Equipment, der Automobilindustrie, Medizin und Pharmazie, in der chemischen Industrie und Maschinenbau zu finden.

Die nach dem erfindungsgemäßen Verfahren gewonnenen Poly(arylenether) können in einem Multichipmodul verwendet werden, in dem ein typischerweise aus Silicium, Glas oder Keramik hergestelltes Substrat hochdichte mehrschichtige Schaltverbindungen trägt, in denen es sich bei dem dielektrischen Material, das für Isolierung zwischen den verschiedenen Schichten sorgt, um das erfindungsgemäße Polymer handelt. Auf den Schaltverbindungen sind Halbleiterchips angebracht, die durch elektrische Leiter in der Schaltverbindung miteinander verbunden sind. Das Substrat kann auch elektrische Leiter umfassen, z. B. für Strom und Erdung. Bleirahmen stellen Verbindungen mit externen Schaltkreisen her. In solchen mehrschichtigen Schaltverbindungen sind die Schichten elektrischer Verbindungen durch die erfindungsgemäßen Polymere voneinander getrennt. Die erfindungsgemäßen Polymere können auch verschiedene Leiterbereiche voneinander trennen, z. B. verschiedene diskrete Leiter in einer gemeinsamen Schicht. Eine Durchgangsleitung kann bei Bedarf die Verbindungen zwischen den verschiedenen Schichten schaffen. Die Durchgangsleitung ist durch ein Bindekissen mit einer integrierten Schaltung verbunden. Diese Durchgangsleitung kann vom Aufbau aufeinandergeschichteten Säulen ähneln, obwohl auch andere in der Technik übliche Formen wie treppenförmige oder ineinandergreifende Durchgangsleitungen verwendet werden können. Andere Multichipmodulformen, in denen die erfindungsgemäßen Polymere verwendet werden können, sind in der Technik bekannt.

Die nach dem erfindungsgemäßen Verfahren gewonnenen Poly(arylenether) können auch als dielektrische Zwischenschicht in einer Schaltverbindung für einen Chip mit einer einzigen integrierten Schaltung verwendet werden. Ein Chip mit einer integrierten Schaltung hätte auf seiner Oberfläche mehrere Schichten der dielektrischen Poly(arylenether)-Substanz und mehrere Schichten an Metalleitern. Er kann auch Bereiche der dielektrischen Poly(arylenether)-Substanz zwischen diskreten Metalleitern oder Leiterbereichen in der gleichen Schicht bzw. im gleichen Niveau eines integrierten Schaltkreises umfassen. Das Poly(arylenether)-Polymer kann auch zusammen mit herkömmlichem Silicium verwendet werden, wo das Polymer zwischen den Metalllinien auf einer Schicht verwendet wird und Silicium als dielektrisches Material zwischen Schichten von Leitermaterial dient.

Die nach dem erfindungsgemäßen Verfahren gewonnenen Poly(arylenether) können außerdem als Schutzbeschichtungen für die Chips integrierter Schaltkreise zum Schutz gegen Alphateilchen verwendet werden. Halbleiterbauteile sind störanfällig, wenn Alphateilchen aus radioaktiven Spurenkontaminanten in der Verpackung oder anderen in der Nähe befindlichen Materialien auf die aktive Oberfläche auftreffen. Ein integrierter Schaltkreis kann mit einer Schutzbeschichtung aus dem Poly(arylenether) versehen werden. Typischerweise würde man einen Chip für einen integrierten Schaltkreis auf einem Substrat anbringen und mit einem geeigneten Klebemittel befestigen. Eine Beschichtung mit dem Poly(arylenether) stellt für die aktive Oberfläche des Chips eine Schutzschicht gegen Alphateilchen zur Verfügung. Gegebenenfalls bietet eine Einkapselung, z. B. aus Epoxid oder einem Silikon, zusätzlichen Schutz.

Die Poly(arylenether) können auch als Substrat (dielektrisches Material) in Schaltplatten oder gedruckten Schaltplänen verwendet werden. Auf der Oberfläche der Schaltplatte aus dem Poly(arylenether) befinden sich Muster für die Schaltkreise verschiedener elektrischer Leiter. Die Schaltplatte kann zusätzlich zu dem erfindungsgemäßen Poly(arylenether) verschiedene Verstärker, z. B. nicht leitende gewebte Fasern wie Glastuch, enthalten. Solche Schaltplatten können einseitig, doppelseitig oder mehrschichtig sein.

Filme oder Beschichtungen aus dem erfindungsgemäßen Poly(arylenether) können durch Lösungstechniken wie Sprühen, Spinbeschichtung oder Gießen hergestellt werden. Bevorzugte Lösemittel sind Tetrahydrofuran, 2-Ethoxyethylether, Cyclohexanon, Cyclopentanon, Toluol, Xylol, Chlorbenzol, N-Methylpyrrolidon, N,N-Dimethylformamid, N,N-Dimethylacetamid, Methlyisobutylketon, 2- Methoxyethylether, 5-Methyl-2-hexanon, gamma-Butyrolacton und deren Mischungen, wobei Tetrahydrofuran besonders bevorzugt ist. Typischerweise liegt die Beschichtungsdicke zwischen 0,1 und 15 µm. Als dielektrische Zwischenschicht beträgt die Filmdicke weniger als 2 µm.

Additive können auf in der Technik bekannte Weise dazu verwendet werden, dem Produkt bestimmte Zieleigenschaften zu verleihen bzw. diese zu verbessern, darunter Stabilisierungsmittel, Flammhemmer, Pigmente, Weichmacher und oberflächenaktive Mittel. Kompatible oder nichtkompatible Polymere können eingemischt werden, um dem Produkt eine erwünschte Eigenschaft zu verleihen.

Mittel zur Verbesserung der Haftung können ebenfalls eingesetzt werden, um die Poly(arylenether)polymere haftend auf den entsprechenden Substraten aufzubringen. Typisch für solche Mittel sind Hexamethyldisilazan, das dazu verwendet werden kann, mit der an der Oberfläche zur Verfügung stehenden Hydroxylfunktionalität in Wechselwirkung zu treten, z. B. Siliciumdioxid, das einer solche Hydroxylfunktionalitäten schaffenden Feuchtigkeit ausgesetzt wurde.

Polymere für mikroelektronische Anwendungen enthalten vorzugsweise eine geringe Menge (im Allgemeinen weniger als 1 ppm, vorzugsweise weniger als 10 ppb) ionische Verunreinigungen, vor allem für dielektrische Zwischenschichten.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele:

### Polymerisation (nicht erfindungsgemäß)

3,8 kg Bisphenol FL und 3,3 kg 4,4-Dibrombiphenyl wurden in 2,5 kg Diphenylether, 10,5 kg Benzophenon und 5 kg Xylol in einem 30 L-Reaktor bei 100 °C gelöst und die Mischung gerührt. Das Gemisch wurde aufgeheizt und eine 45 Gew.-%ige wässrige KOH-Lösung (2,7 kg) wurde langsam über 2 h zudosiert. Wasser wurde aus dem Gemisch mittels azeotroper Destillation entfernt. Das Xylol wurde abdestilliert. Anschließend wurde eine Mischung aus Kupferbromid (23 g) und Acridin (19 g) zugegeben. Das Reaktionsgemisch wurde auf 200 °C aufgeheizt und mehrere Stunden bis zum gewünschten Polymeraufbau gerührt.

Ein Viertel des gewonnenen Reaktionsgemischs (Rohprodukt) wurde dann in dem nächsten Schritt aufgereinigt.

### Aufreinigung (erfindungsgemäß)

Die Rohpolymerlösung aus dem Polymerreaktor enthielt ca. 1,3 kg Polymer, 2,6 kg Benzophenon, 0,62 kg Diphenylether, 0,62 kg Kaliumbromid und den Katalysator. 23 mL Essigsäure wurde zugegeben und die Lösung wurde bis auf ein Volumen von ca. 30 L mit Tetrahydrofuran verdünnt.

Die unlöslichen Kaliumbromid- und Kupferbromid-Salze wurden mittels einer Druckfiltration aus der Polymerlösung entfernt. Diese Filtration erfolgte mit einem Seitz-Tiefenfilter KS80 (Porengröße 0,6-1,6 µm) in einer Druckfilternutsche.

Die klare filtrierte Polymerlösung wurde dann mit einer lösungmittelstabilen Nanofiltration (OSN) aufgereinigt. Ein DuraMem® 900 Membranmodul (Cut-off: 900 g/mol) der Firma Evonik mit einer Fläche von 1,8 m² wurde eingesetzt. Die Polymerlösung wurde zuerst mittels der Membran bis zu einer Konzentration von ca. 10 Gew.-% Polymer aufkonzentriert. Dann wurde die Lösung bei einem Druck von 20 bar und einer Temperatur von ca. 30 °C mit 120 L THF gewaschen. Die hochsiedenden Lösungsmittel (Diphenylether und Benzophenon), kleineren Oligomere und löslichen Katalysatorreste gingen durch die Membran ins Permeat und eine hochreine Polymerlösung in THF wurde in der Retentatlösung erhalten.

Die GC-Analyse dieser Polymerlösung zeigte einen Anteil an Benzophenon und Diphenylether unter 0,1 % und die zahlensmittlere Molmasse des Polymers (Mn) stieg auf Grund der Abtrennung der Oligomere von 16000 auf 22000. Außerdem bewies eine Elementaranalyse die Entfernung von anorganischen Salzen und Katalysatoren.

Anteile im aufgereinigten, isolierten Polymer:
Kupfer < 20 ppm
Kalium < 10 ppm

## Patentansprüche

1. Verfahren zur Aufreinigung von Poly(arylenethern) der Formel (I) 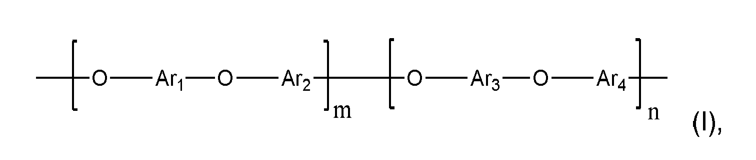 worin m = 0 bis 1,0 und n = 1,0 - m ist
und
Ar₁, Ar₂, Ar₃ und Ar₄ unabhängig voneinander zweiwertige Arylenreste bedeuten,
wobei die Verbindung der Formel (I) in einem ersten Schritt unter Erhalt eines Rohprodukts hergestellt werden durch Inkontaktbringen eines Metallsalzes zweiwertiger Dihydroxy-Derivate von Ar₁ bzw. Ar₃ in Gegenwart und eines Lösemittels LM1 mit einem oder mehreren dihalogenierten Derivaten von Ar₂ und/oder Ar₄
**dadurch gekennzeichnet, dass** ein ggf. vorhandener Niederschlag unter Erhalt einer Lösung L abgetrennt (Schritt B) und die Lösung L einer Membranfiltration unterzogen wird (Schritt C).

2. Verfahren gemäß Anspruch 1, **dadurch gekennzeichnet, dass** das Rohprodukt in Gegenwart eines Katalysators hergestellt wird.

3. Verfahren nach Anspruch 2, **dadurch gekennzeichnet, dass** der Katalysator ein Metall enthält, das ausgewählt ist aus Kupfer, Palladium oder Eisen.

4. Verfahren nach einem der vorherigen Ansprüche, **dadurch gekennzeichnet, dass** der Mischung M vor der Abtrennung eines ggf. vorhandenen Niederschlags (Schritt B) in einem Schritt A ein aprotisches, polares Lösemittel LM 2 hinzugegeben wird.

5. Verfahren nach Anspruch 4, **dadurch gekennzeichnet, dass** das Lösemittel des Schritts A ausgewählt wird aus einem aliphatischen oder aromatischen, cyclischen oder nicht-cyclischen Ether, Keton, Ester oder einem Gemisch daraus.

6. Verfahren nach einem der Ansprüche 4 oder 5, **dadurch gekennzeichnet, dass** das Lösemittel des Schritts A) aus Cyclohexanon, Tetrahydrofuran, gamma-Butyrolacton oder einem Gemisch, vorzugsweise Tetrahydrofuran, ausgewählt wird.

7. Verfahren nach einem der Ansprüche 4 bis 6, **dadurch gekennzeichnet, dass** mit Schritt A eine Säure zur Mischung M gegeben wird.

8. Verfahren nach einem der vorherigen Ansprüche, **dadurch gekennzeichnet, dass** die Abtrennung des Niederschlags gemäß Schritt B mittels Filtration oder Zentrifugation erfolgt.

9. Verfahren nach einem der vorherigen Ansprüche, **dadurch gekennzeichnet, dass** die Membranfiltration eine Nanofiltration ist.

10. Verfahren nach einem der vorherigen Ansprüche, **dadurch gekennzeichnet, dass** die Membran der Membranfilter eine Trennschicht aufweisen, die ausgewählt ist aus Polymeren, Glas, Metall, Keramik oder deren Gemischen.

11. Verfahren nach einem der vorherigen Ansprüche, **dadurch gekennzeichnet, dass** in einem dem Schritt C folgenden Schritt D das Polymer, das in der Lösung aus C enthalten ist, als Feststoff gewonnen wird.

12. Verfahren nach einem der vorherigen Ansprüche, **dadurch gekennzeichnet, dass** in Formel (I) m = 1 ist und Ar₁ der Formel (V) 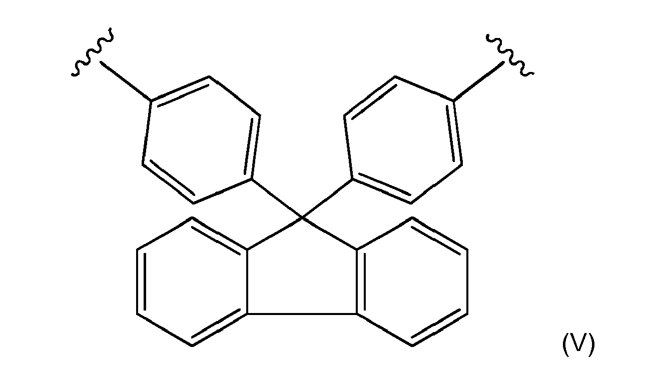 entspricht.

13. Verfahren nach einem der vorherigen Ansprüche, **dadurch gekennzeichnet, dass** in Formel (I) m = 1 ist und Ar₂ der Formel (VI) 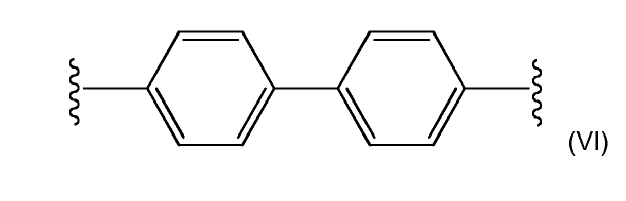 entspricht.

14. Verfahren nach einem der vorherigen Ansprüche, **dadurch gekennzeichnet, dass** in Formel (I) m = 1 ist und der Poly(arylenether) ein Polymer der Formel (IV) 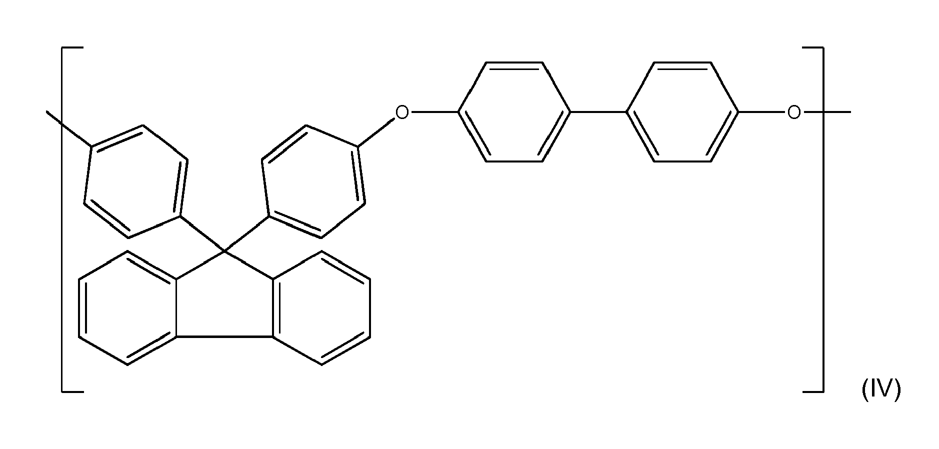 ist.

15. Verwendung des nach einem der vorherigen Ansprüche hergestellten Poly(arylenethers) der Formel (I) in Spritzgussteilen, Halbzeugen (Stockshapes), Fasern, Folien, Beschichtungen, elektronischen Schaltkreisgegenständen und Filmen sowie als Material für Dichtungen.
